# EUROPEAN PATENT APPLICATION

(11) **EP 2 902 236 A1**
(43) Date of publication of application: **05.08.2015**
(21) Application number: 15152746.2
(22) Date of filing: 27.01.2015
(51) Int. Cl.: B60K 6/48, B60K 6/547, B60K 6/36, F16H 3/08

(54) **Transmission for hybrid vehicle**

(30) Priority: 30.01.2014 JP 2014015132
(71) Applicant: AISIN AI Co., Ltd., Nishio-shi Aichi-ken 445-0006 (JP); AISIN SEIKI KABUSHIKI KAISHA, Kariya-shi, Aichi-ken 448-8650 (JP)
(72) Inventor: Nakashima, Hidetaka, Nishio-shi, Aichi-ken,, 445-0006 (JP); Ogino, Daizo, Nishio-shi, Aichi-ken,, 445-0006 (JP); Mori, Kyosuke, Kariya-shi, Aichi-ken,, 448-8650 (JP); Misu, Takahiro, Kariya-shi, Aichi-ken,, 448-8650 (JP)
(74) Representative: Winter, Brandl, Fürniss, Hübner, Röss, Kaiser, Polte - Partnerschaft mbB

(57) **Abstract**

A transmission for hybrid vehicle includes a change-speed gear assembly (4), an engine-side connector (5), and a motor-side connector (6). The change-speedgearassembly (4) includes drive gears and driven gears making change-speed stages. A specific drive gear (45D) of the drive gears, and a specific driven gear (45F) of the driven gears, making a specific change-speed stage (e.g., the fifth-speed change-speed stage) of the change-speed stages, are made switchable between the idling state and the rotary connection state. The engine-side connector (5) switches the other drive gears and driven gears, making the other change-speed stages, between the idling state and the rotary connection state, respectively. The motor-side connector (6) includes a motor-side drive gear (61) meshing with a motor-side driven gear (45D) doubled as the specific drive gear (45D). The motor-side connector (6) switches the specific drive gear (45D), and the specific driven gear (45F) between the idling state and the rotary connection state, respectively.

## Description

### INCORPORATION BY REFERENCE

The present invention is based on Japanese Patent Application No. 2014-015132, filed on January 30, 2014, the entire contents of which are incorporated herein by reference.

### BACKGROUND OF THE INVENTION

### Field of the Invention

The present invention relates to a transmission for hybrid vehicles equipped with an engine and a motor as the driving sources.

### Description of the Related Art

Various power transmission mechanisms, which are suitable for hybrid vehicle equipped with an engine and a motor serving as the driving sources, have been proposed. For example, a power transmission mechanism disclosed in Japanese Unexamined Patent Publication (KOKAI) Gazette No. 2002-114048 comprises: a staged transmission including an input shaft connected to an engine, and an output shaft connected to drive wheels; a first gear and a second gear disposed on a rotary shaft driven by an electric motor; and a switcher switching connection modes of the electric motor selectively. The switcher switches selectively between an output-shaft connection mode in which the first gear and an output-shaft gear are meshed one another, and an input-shaft connection mode in which the second gear and an input-shaft gear are meshed one another. As a device for carrying out the selective switching, the gazette discloses a synchronous clutch (or selective connector) for motor in the "Preferred Embodiment" section. According to the gazette, the synchronous clutch makes it possible to use the electric motor dually for driving the drive wheels and for starting the engine so that the manufacturing costs can be cut down, and simultaneously the electric motor does not turn into excessive resistance at the time of starting the engine so that fuel consumption or mileage can be upgraded.

Many three-phase synchronous electric-motor generators have been often used for such types of motors for driving vehicle to travel. The three-phase synchronous electric-motor generators drive drive wheels by the power supply from an vehicular on-board battery during power traveling, and carry out regenerative power generation by the braking torque inputted from the drive wheels during braking so that the battery can be charged.

Incidentally, the power transmission mechanism according to Japanese Unexamined Patent Publication (KOKAI) Gazette No. 2002-114048 comprises two drive gears, and a synchronous clutch (or selective connector) for motor. Moreover, it further comprises an input-shaft gear, and an output-shaft gear. Although it is possible to add these constituent elements to the constitution of conventional transmissions for engine-drive vehicle, the addition increases the cost by the costs of the synchronous clutch and four gears. In addition, the addition complicates an interlock mechanism preventing multiple change-speed stages from meshing doubly one another. Moreover, the addition has enlarged restrictions when providing vehicles with the resulting transmission on-board, because the addition increases the number of gears to be disposed one after another in a raw on the input shaft and output shaft so that an axis-wise overall length of the resultant transmission has increased or extended.

### SUMMARY OF THE INVENTION

The present invention has been developed in view of the problematic issues of the power transmission according to aforementioned Japanese Unexamined Patent Publication (KOKAI) Gazette No. 2002-114048 in related art. It is therefore an object of the present invention to make the development costs and manufacturing costs of a transmission for hybrid vehicle inexpensive by adding only constituent elements required essentially and minimally to one of conventional transmissions for engine-drive vehicle. Moreover, it is another object of the present invention to provide a novel transmission for hybrid vehicle comprising an interlock mechanism, which excels in the function of preventing multiple change-speed stages from meshing one another doubly, without increasing or extending an overall length of the resulting transmission.

For example, a transmission for hybrid vehicle according to the present invention achieving the aforementioned objectives comprises:
an input shaft to be rotatably connected to a rotary shaft of an engine;
an output shaft to be rotatably connected to drive wheels;
a change-speed gear assembly including drive gears disposed on the input shaft, driven gears disposed on the output shaft to mesh with the drive gears, the drive gears and driven gears making change-speed stages, respectively, wherein: a specific drive gear of the drive gears and a specific driven gear of the driven gears, which make a specific change-speed stage of the change-speed stages, are made switchable between an idling state and a rotary connection state: and the other drive gears and driven gears, which make change-speed stages other than the specific change-speed stage, are made switchable between an idling state and a rotary connection state, respectively;
an engine-side connector operating to switch one of the drive gears and the driven gears, which make change-speed stages other than the specific change-speed stage, between the idling state and the rotary connection state, respectively; and
a motor-side connector including a motor-side drive gear to be rotatably driven by a motor while meshing with a motor-side driven gear doubled as one of the specific drive gear and the specific driven gear, a drive-side sub-connector operating to switch the specific drive gear between the idling state and the rotary connection state, and a driven-side sub-connector operating to switch the specific driven gear between the idling state and the rotary connection state.

Moreover, it is preferable that the transmission according to the present invention can further comprise a motor-side connection controller controlling the drive-side sub-connector and the driven-side sub-connector independently, wherein the motor-side connection controller carries out a 3-way selection control to select one mode from the group consisting of:
a direct-connection mode, wherein the specific driven gear is put in the rotary connection state;
a change-speed mode, wherein the specific driven gear is put in the idling state and the specific drive gear is put in the rotary connection state; and
an idling mode, wherein the specific driven gear is put in the idling state and the specific drive gear is put in the idling state.

In addition, in the transmission according to the present invention, it is preferable that the change-speed gear assembly can comprise a reverse gear subassembly including a reverse drive gear disposed on the input shaft, a reverse driven gear disposed on the output shaft, and a reverse idler gear meshing with the reverse drive gear and the reverse driven gear to make a reverse change-speed stage, wherein a constituent reverse gear, one of the reverse drive gear and the reverse driven gear, is made switchable between the idling state and the rotary connection state; and that the drive-side sub-connector, or the driven-side sub-connector can comprise a selective connector including a sleeve, wherein: the specific drive gear, or the specific driven gear, and the constituent reverse gear are put in the idling state when the sleeve is at a neutral position thereof; the sleeve is moved from the neutral position in one of opposite axial directions thereof, thereby operating the specific drive gear or the specific driven gear to switch to the rotary connection state from the idling state; and the sleeve is moved from the neutral position in another one of the opposite axial directions, thereby operating the constituent reverse gear to switch to the rotary connection state from the idling state.

Moreover, in the transmission according to the present invention, it is preferable that a motor torque can be transmitted from the motor-side drive gear to the output shaft via the specific drive gear, the input shaft and the reverse gear subassembly when the motor is employed to reverse drive the hybrid vehicle.

In addition, it is allowable as well that the specific drive gear can be arranged adj acent to one of opposite ends of the input shaft close to the engine, or adjacent to another one of the opposite ends away from the engine; and a rotary shaft of the motor can be arranged parallel to the input shaft, thereby making an axis-wise overall length of the motor involving the rotary shaft fall within a range of an overall length of the input shaft.

The transmission for hybrid vehicle according to the present invention comprises the change-speed gear assembly including multiple gears of which one of the specific drive gear and the specific driven gear making the specific change-speed stage is doubled as the motor-side driven gear. Moreover, both the specific drive gear and specific driven gear are made switchable between the idling state and the rotary connection state. The thus constructed present transmission can be materialized by only adding a connector for the specific change-speed stage and a motor-side drive gear in a quantity of one, respectively, to a conventional transmission for engine-drive vehicle. In addition, the thus constructed present transmission can transmit a motor torque, which it receives from the motor-side drive gear, to either of the input shaft and the output shaft. Therefore, it is possible to make development costs inexpensive, because constituent elements are added in a lesser quantity, and because the present transmission for hybrid vehicle can be constructed without altering a conventional or existing transmission for engine-drive vehicle greatly. Moreover, it is possible to make manufacturing costs inexpensive, because the present transmission comprises a reduced number of gears, compared with that of the power transmission mechanism disclosed in Japanese Unexamined Patent Publication (KOKAI) Gazette No. 2002-114048. In addition, the number of gears, which are disposed on the input shaft and output shaft one after another in a raw, does not increase at all in the present transmission. Consequently, the present transmission produces minor restrictions when providing it on-board, because the present transmission does not exhibit any increased or extended overall length at all in the axis-wise direction, compared with that of a conventional or existing transmission for engine-drive vehicle.

Moreover, the present transmission according to the first preferred embodiment further comprising the motor-side connection controller carries out the 3-way connection control where one mode is selected from the group consisting of the direct-connection mode, the change-speed mode, and the idling mode. In the direct-connection mode, the driving efficiency is high because a motor torque is transmitted to the output shaft and drive wheels directly, and the regeneration efficiency becomes also high in the regenerative power generation during braking. In the change-speed mode, preferred change-speed ratios can be selected in compliance with situations even during motor-drive traveling. In addition, in the direct-connection mode and change-speed mode, it is possible to carry out dual- or hybrid-drive traveling by appropriately distributing a torque to the motor and the engine, respectively. In the idling mode, the motor does not produce any unnecessary rotary load at all during engine-drive traveling. Therefore, a comprehensive advantageous effect resulting from the respective modes according to the first preferred embodiment improves the fuel consumption or mileage of hybrid vehicle.

In addition, the present transmission according to the second preferred embodiment, which comprises: the change-speed gear assembly including the multiple forward gears, and a reverse gear subassembly; and a selective connector including a sleeve and making the drive-side sub-connector or the driven-side connector operates only one of the specific change-speed stage and the rear change-speed stage to switch to the rotary connection state from the idling state. Consequently, regardless of how a hybrid vehicle is traveled by driving the motor or driving the engine, the present transmission according to the second preferred embodiment makes an excellent interlock mechanism, because it securely prevents the specific change-speed stage and the reverse change-speed stage from meshing one another doubly.

Moreover, the present transmission according to the third preferred embodiment, where a motor torque is transmitted via the input shaft and the reverse gear subassembly when the motor is employed to carry out rear driving, makes it unnecessary to reverse the motor in the rotary direction upon reverse traveling a hybrid vehicle. Therefore, controlling the motor is simplified, because it becomes unnecessary to switch the motor between normal (or clockwise) and reverse (or counterclockwise) in the rotary direction. In addition, the motor is not only used as a driving means for traveling a hybrid vehicle, but also can be doubled as a means for starting the engine. Moreover, a change-speed ratio during reverse driving a hybrid vehicle by the motor can be set up in a wide range, because the change-speed ratio is a value obtained by multiplying a change-speed ratio, which is determined by the number of gear teeth in the motor-side driving gear and motor-side driven gear, by a change-speed ratio of the reverse gear subassembly.

In addition, the present transmission according to the fourth preferred embodiment, where the specific drive gear is arranged adjacent to one of the opposite ends of the input shaft or adjacent to the other one of the opposite ends to make the motor's axis-wise overall length fall within a range of the input shaft's axis-wise overall length, is not increased or extended in the axis-wise overall length involving that of the present transmission and that of the motor. Therefore, restrictions become less when providing the present transmission according to the fourth preferred embodiment on-board. Thus, the present transmission according to the fourth preferred embodiment is suitable especially for "FF" type (i.e., front-engine and front-drive type) vehicles whose engine, transmission and motor are arranged in proximity to one another.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure.
Fig. 1 is a skeleton diagram illustrating power transmission routes in a transmission for hybrid vehicle according to First Embodiment of the present invention.
Figs. 2A and 2B are diagrams illustrating circumstances where a motor-side connection controller controls a motor-side connector to put it in the direct-connection mode. Fig. 2A shows one of the circumstances during motor-drive traveling and during braking when regenerative power generation is carried out. Fig. 2B shows the other one of the circumstances during dual- or hybrid-drive traveling.
Fig. 3 is a diagram illustrating another circumstance where the motor-side connection controller controls the motor-side connector to put in in the change-speed mode.
Fig. 4 is a diagram illustrating a still another circumstance during engine-drive traveling where the motor-side connection controller controls the motor-side connector to put in in the idling mode.
Fig. 5 is a skeleton diagram illustrating power transmission routes in a conventional transmission for engine-drive vehicle according to related art, which comprises change-speed stages constructed in the same manner as those of First Embodiment.
Fig. 6 is a skeleton diagram illustrating power transmission routes in a transmission for hybrid vehicle according to Second Embodiment of the present invention.

### DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

### (First Embodiment)

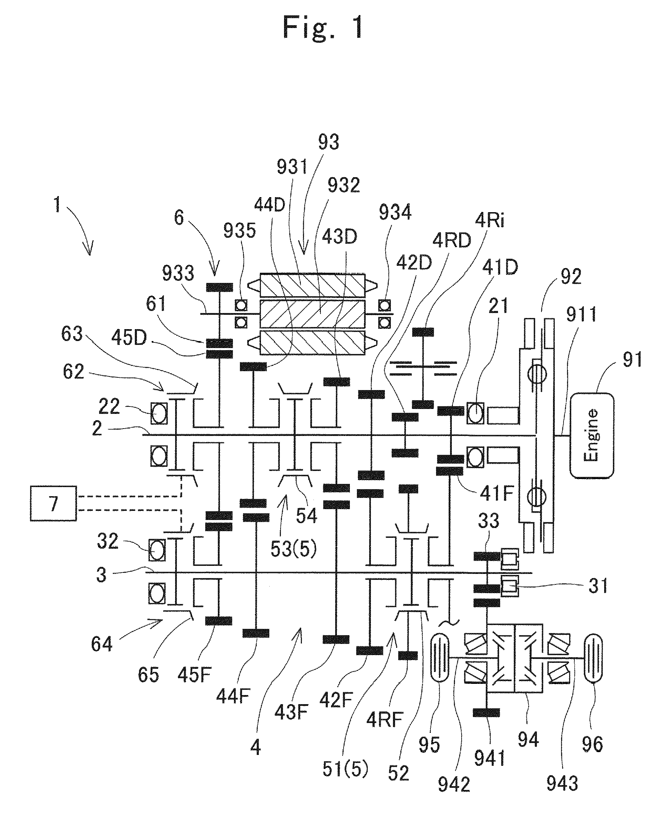

First Embodiment for executing the present invention will be hereinafter described with reference to Figs. 1 through 4. Fig. 1 is a skeleton diagram illustrating power transmission routes in a transmission 1 for hybrid vehicle according to First Embodiment of the present invention. The transmission 1 is provided on-board in an "FF" type hybrid vehicle. The transmission 1 selects any one of forward first through fifth speeds and a reverse speed in change-speed stages, and then subjects the engine torque of an engine 91 to a change-speed operation to output. Moreover, the transmission 1 outputs the motor torque of a motor 93 directly, or via any one of the change-speed stages. The transmission 1 is connected rotatably to a left drive wheel 95 and a right drive wheel 96 via a differential gear unit 94 on the output side. The transmission 1 comprises an input shaft 2, an output shaft 3, a change-speed gear assembly 4, an engine-side connector 5, a motor-side connector 6, and a motor-side connection controller 7.

The input shaft 2 is supported axially and rotatably to a not-shown transmission case by a pair of bearings (21, 22) arranged at one of the opposite ends and the other opposite end in the axial direction. The input shaft 2 is rotatably connected to a rotary shaft 911 of the engine 91 by way of a clutch 91 at the right-side opposite end in the drawings. For the engine 91, common gasoline engines or diesel engines, and gas engines using combustible gases as the fuel can be employed, but the engine 91 is not limited to the engines. The clutch 92 connects and disconnects the transmission of engine torque. For the clutch 92, common multiple-plate friction clutches can be used, for instance, but the clutch 92 is not limited to the clutches.

The output shaft 3 is supported axially and rotatably to the not-shown transmission case by a pair of bearings (31, 32) arranged at one of the opposite ends and the other opposite end in the axial direction. The output shaft 3 is provided with an output gear 33 at a position close to the bearing 31 on the side of the one of the opposite ends. The output gear 33 meshes with an input gear 941 of the differential gear unit 94. Output-side left and right axles (942, 943) of the differential gear unit 94 are rotatably connected to the left drive front wheel 95 and right drive front wheel 96, respectively.

The change-speed gear assembly 4 is disposed so as to selectively establish each of the change-speed stages, such as the forward first through fifth speeds and the reverse speed. The change-speed gear assembly 4 comprises six drive gears 41D through 45D and 4RD, which are disposed on the input shaft 2, and six driven gears 41F through 45F and 4RF, which are disposed on the output shaft 3. Describing them in more detail, the first-speed drive gear 41D, the reverse drive gear 4RD, the second-speed drive gear 42D, the third-speed drive gear 43D, the fourth-speed drive gear 44D, and the fifth-speed drive gear 45D are arranged in this order from a side on the one of the opposite ends of the input shaft 2 to another side on the other opposite end (i.e., from the right side to left side in Figs. 1 through 4). The first-speed drive gear 41D, the reverse drive gear 4RD, and the second-speed drive gear 42D are made un-rotatable relatively to the input shaft 2. The third-speed drive gear 43D, the fourth-speed drive gear 44D, and the fifth-speed drive gear 45D are made switchable between the idling state and the rotary connection state to the input shaft 2, respectively.

On the other hand, the first-speed driven gear 41F, the reverse driven gear 4RF, the second-speed driven gear 42F, the third-speed driven gear 43F, the fourth-speed driven gear 44F, and the fifth-speed driven gear 45F are arranged in this order from a side on the one of the opposite ends of the output shaft 3 to another side on the other opposite end (i.e., from the right side to left side in Figs. 1 through 4). The reverse driven gear 4RF is arranged on the outer peripheral face of a sleeve 52 described later in more detail. The first-speed driven gear 41F, the second-speed driven gear 42F, and the fifth-speed driven gear 45F are made switchable between the idling state and the rotary connection state to the output shaft 3, respectively. The reverse driven gear 4RF, the third-speed driven gear 43F, and the fourth-speed driven gear 44F are made un-rotatable relatively to the output shaft 3.

The drive gears 41D through 45D in the forward first-speed through fifth-speed change-speed stages mesh with the driven gears 41F through 45F one another. In First Embodiment, the fifth-speed drive gear 45D, which is present adjacent to the other opposite end of the input shaft 2 away from the engine 91, makes a specific drive gear, whereas the fifth-speed driven gear 45F makes a specific driven gear. Moreover, the fifth-speed drive gear 45D is doubled as a motor-side driven gear 45D in the transmission 1 according to First Embodiment of the present invention. In addition, a reverse idler gear 4Ri is annexed in a reverse gear subassembly making a reverse change-speed stage. The reverse idler gear 4Ri is driven by a reverse command in one of the axial directions, thereby meshing with the reverse drive gear 4RD and with the reverse driven gear 4RF. Thus, the reverse change-speed stage is established. Note that the output shaft 3 herein rotates in the reverse direction opposite to that in the forward change-speed stages.

The engine-side connector 5 comprises a first-speed/second-speed selective sub-connector 51, and a third-speed/fourth-speed selective sub-connector 53. The first-speed/second-speed selective sub-connector 51 is placed between the first-speed driven gear 41F of the output shaft 3 and the second-speed driven gear 42F. The first-speed/second-speed selective sub-connector 51 includes an annular sleeve 52. The sleeve 52 is un-rotatable relatively to the output shaft 3, but is movable in both of the axial directions. When the sleeve 52 is present at the axis-wise neutral position, both of the first driven gear 41F and second driven gear 42F are put in the idling state.

The first-speed/second-speed selective sub-connector 51 moves the sleeve 51 from the neutral position in one of the axial directions (i.e., in the right direction in Figs. 1 through 4), thereby operating the first-speed driven gear 41F to switch to the rotary connection state to the output shaft 3 from the idling state. Moreover, the first-speed/second-speed selective sub-connector 51 moves the sleeve 51 from the neutral position in the other one of the axial directions (i.e., in the left direction in the drawings), thereby operating the second-speed driven gear 42F to switch to the rotary connection state to the output shaft 3 from the idling state. Note that the reverse driven gear 4RF is disposed on the outer peripheral face of the sleeve 52 so as to be un-rotatable relatively to the sleeve 52.

Meanwhile, the third-speed/fourth-speed selective sub-connector 53 is placed between the third-speed drive gear 43D of the input shaft 2 and the fourth-speed drive gear 44D. In the same manner as the first-speed/second-speed selective sub-connector 51, the third-speed/fourth-speed selective sub-connector 53 moves an annular sleeve 54 in both of the axial directions, thereby operating the third-speed drive gear 43D and the fourth-speed drive gear 44D selectively to switch to the rotary connection state to the input shaft 2 from the idling state. Other than the above-described two selective sub-connectors (51, 53), it is possible as well to combine publicly-known synchronizers (e.g., synchromesh mechanisms) appropriately to make up the engine-side connector 5.

The motor 93 is a three-phase synchronous electric-motor generator, and comprises a stator 931 and a rotor 932. The stator 931 has a substantially cylindrical shape, and is disposed fixedly inside a not-shown motor case. The rotor 932 shares the axis with the stator 931 to be arranged inside the cylindrical stator 931. The rotor 932 includes a motor output shaft 933, which rotates integrally with the rotor 932, on the axis. The motor output shaft 933 is supported by a pair of bearings (934, 935) rotatably and axially to the motor case. The motor output shaft 933 is disposed in parallel to the input shaft 2, so that the axis-wise overall length of the motor 93 is accommodated within the range between the fifth-speed drive gear 45D of the input shaft 2 and the reverse drive gear 4RD. The not-shown stator coil of the stator 931 is connected with a not-shown battery, and is thereby constructed so as to carry out a 2-way power conversion.

The motor-side connector 6 comprises a motor-side drive gear 61, a drive-side sub-connector 62, and a driven-side sub-connector 64. The motor-side drive gear 61 is disposed on the motor output shaft 933 un-rotatably in relative to the motor output shaft 933, and thereby rotates integrally with the motor output shaft 933. The motor-side drive gear 61 meshes with the motor-side driven gear 45D (or the fifth-speed drive gear 45D). The drive-side sub-connector 62 is placed between the fifth-speed drive gear 45D of the input shaft 2 and the bearing 22 on the other opposite-end side (i.e., on the left-end side in Figs. 1 through 4). The drive-side sub-connector 62 moves an annular sleeve 63 from the neutral position in one of the axial directions (i.e., in the right direction in the drawings), thereby operating the motor-side driven gear 45D (or the fifth-speed drive gear 45D) to switch to the rotary connection state to the input shaft 2 from the idling state.

The driven-side sub-connector 64 is placedbetween the fifth-speed driven gear 45F of the output shaft 3 and the bearing 32 on the other opposite-end side (i.e., on the left-end side in Figs. 1 through 4). The driven-side sub-connector 64 moves an annular sleeve 65 from the neutral position in one of the axial directions (i.e., in the right direction in the drawings), thereby operating the fifth-speed driven gear 45F to switch to the rotary connection state to the output shaft 3 from the idling state. The motor-side connection controller 7 controls the drive-side sub-connector 62 and driven-side sub-connector 64 independently of each other.

The motor-side connection controller 7 subjects the motor-side connector 6 to a 3-way selection control where one mode is selected from the group consisting of the direct-connectionmode,thechange-speed mode,andtheidling mode. Note that it is possible to combine an electronic controller (or ECU) comprising a CPU to operate on software, an actuator, and an operating rod one another appropriately to make up the motor-side connection controller 7. Moreover, it is allowable as well that the electric controller can control not only the motor-side connector 6 but also the engine-side connector 5 together with the motor-side connector 6.

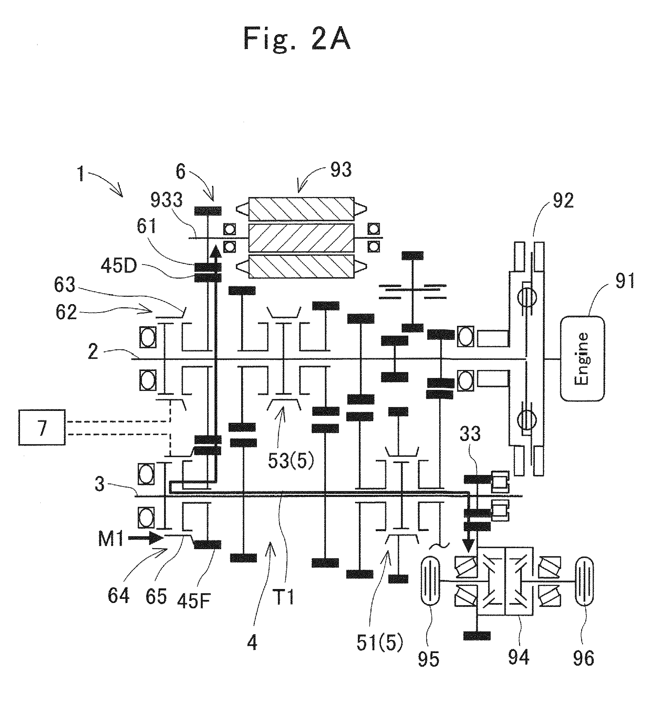

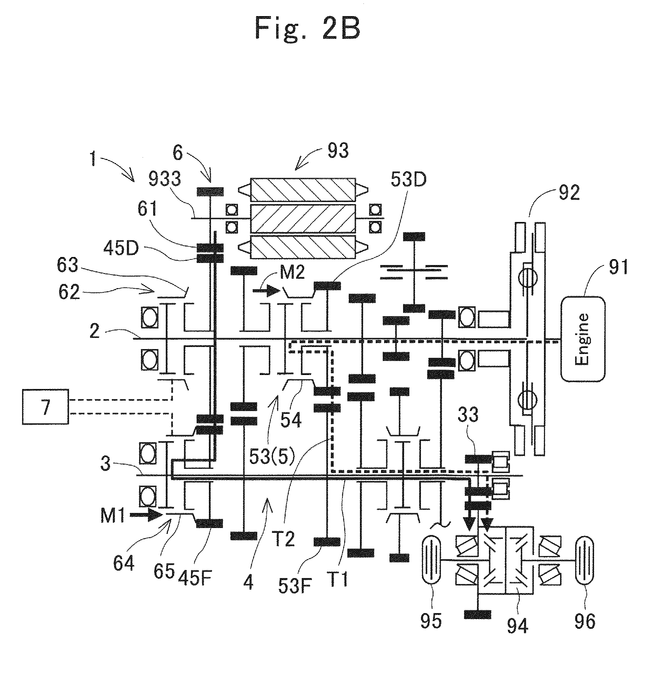

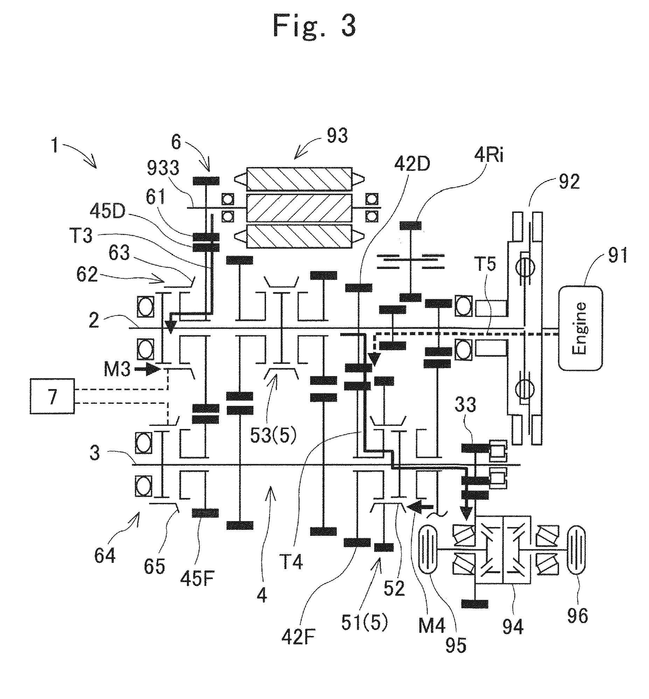

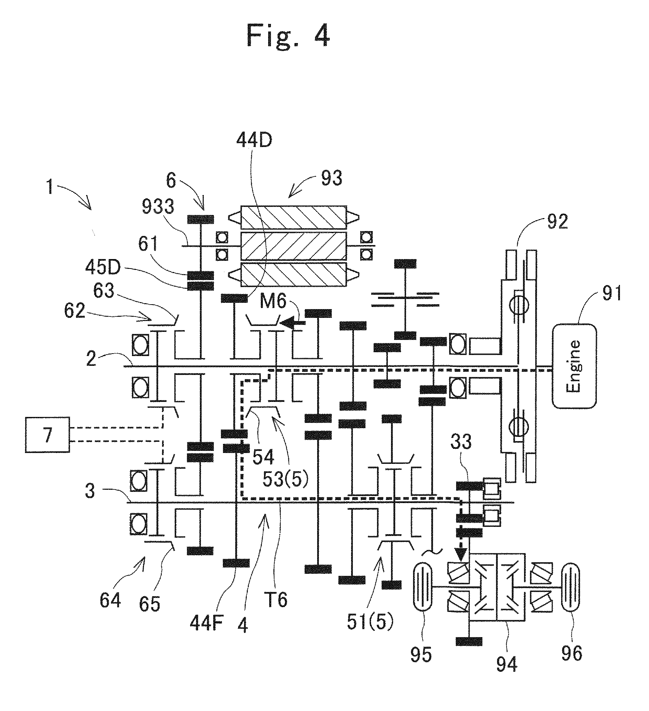

Subsequently, operations of the transmission 1 for hybrid vehicle according to First Embodiment constructed as described above will be described one by one while sorting them out into each of the distinct modes in the 3-way selection control that the motor-side connection controller 7 carries out. Figs. 2A and 2B are diagrams illustrating circumstances where the motor-side connection controller 7 controls the motor-side connector 6 to put it in the direct-connection mode. Fig. 2A shows one of the circumstances during motor-drive traveling and during braking when regenerative power generation is carried out. Fig. 2B shows the other one of the circumstances during dual- or hybrid-drive traveling. Fig. 3 is a diagram illustrating another circumstance where the motor-side connection controller 7 controls the motor-side connector 6 to put in in the change-speed mode. Fig. 4 is a diagram illustrating a still another circumstance during engine-drive traveling where the motor-side connection controller 7 controls the motor-side connector 6 to put in in the idling mode.

As shown by the arrow "M1" in Fig. 2A, the motor-side connection controller 7 moves the sleeve 65 of the drive-side sub-connector 64 in one of the axial directions, and thereby the direct-connection mode materializes. In the direct-connection mode, the fifth-speed driven gear 45F is put in the rotary connection state to the output shaft 3. As shown by the solid-line arrow "T1" in Fig. 2A, a motor torque outputted from the motor 93 is transmitted from the motor-side drive gear 61 to the differential gear unit 94 via the motor-side driven gear 45D (or the fifth-speed drive gear 45D), the fifth-speed driven gear 45F and the output shaft 3. On this occasion, the engine-side connector 5, and the drive-side sub-connector 62 are not operated to switch to the rotary connection state from the idling state, and thereby none of the change-speed stages are established so that no engine torque is transmitted. Thus, motor-drive traveling is carried out. Moreover, during braking, a braking torque is transmitted through the same transmission route in the opposite direction, and thereby the motor 93 carries out regenerative power generation.

In the direct-connection mode, the engine-side connector 5 is operated to switch to the rotary connection state from the idling state, and any one of the change-speed stages for transmitting an engine torque is established. For example, as shown by the arrow "M2" in Fig. 2B, the third-speed/fourth-speed sub-connector 53 moves the sleeve 54 in one of the axial directions, and thereby the third-speed drive gear 43D is operated to switch to the rotary connection state to the input shaft 2 from the idling state. Thus, the third-speed change stage is established. Then, the clutch 92 is operated to engage with the engine 91, and thereby the motor 93 is connected directly to the output shaft 3, and thereby the engine 91 carries out the third-speed dual- or hybrid-drive traveling. In this instance, the motor torque is transmitted to the differential gear unit 94 through the transmission route as designated by the same solid-line arrow "T1" as that in Fig. 2A. On the other hand, as shown by the broken-line arrow "T2" in Fig. 2B, the engine torque outputted from the engine 91 is transmitted from the clutch 92 to the output shaft 3 via the input shaft 2, the three-speed drive gear 43D and the third-speed driven gear 43F, and is thereby incorporated into the motor torque at the output shaft 3.

Although the following are abbreviated in the drawings, the fifth-speed change-speed stage for transmitting another engine torque is established when the drive-side sub-connector 62, not the engine-side connector 5, is operated to switch to the rotary connection state from the idling state in the direct-connection mode. Describing the situation in more detail, the motor-side connection controller 7 moves the sleeve 63 of the drive-side sub-connector 62 in one of the axial directions, and thereby the fifth-speed drive gear 45D is put in the rotary connection state to the input shaft 2. Besides, since the fifth-speed driven gear 45F has already been put in the rotary connection state to the output shaft 3, the fifth-speed change-speed stage is established. Thus, the motor 93 is connected directly to the output shaft 3, and the engine 91 carries out the fifth-speed dual- or hybrid-drive traveling. Note that, in this instance, an interlock mechanism, which prohibits change-speed stages other than the fifth-speed change-speed stage from being established, comes to function at the engine-side connector 5.

As shown by the arrow "M3" in Fig. 3, the motor-side connection controller 7 moves the sleeve 62 of the drive-side sub-connector 63 in one of the axial directions to put the sleeve 65 of the driven-side sub-connector 64 at the neutral position, and thereby the change-speed mode materializes. In the change-speed mode, the motor-side driven gear 45D (or the fifth-speed drive gear 45D) is put in the rotary connection state to the input shaft 2, and the fifth-speed driven gear 45F is put in the idling state to the output shaft 3. On this occasion, a motor torque outputted from the motor 93 is transmitted from the motor-side drive gear 61 to the input shaft 2 via the motor-side driven gear 45D (or the fifth-speed drive gear 45D), as shown by the solid-line arrow "T3" in Fig. 3.

Moreover, the engine-side connector 5 is operated to switch to the rotary connection state from the idling state, and thereby any one of the change-speed stages for transmitting the motor torque is established. For example, as shown by the arrow "M4" in Fig. 3, the first-speed/second-speed selective sub-connector 51 moves the sleeve 52 in the other one of the axial directions (i.e., in the left direction in Figs. 1 through 4), the second-speed driven gear 42F is operated to switch to the rotary-connected state to the output shaft 3 from the idling state, and thereby the second-speed change speed state is established. Thus, motor-drive traveling using the second-speed change-speed stage is carried out. In addition, as shown by the solid-line arrow "T4" in Fig. 3, the motor torque outputted from the motor 93 is transmitted from input shaft 2 to the differential gear unit 94 via the second-speed drive gear 42D, the second-speed driven gear 42F and the output shaft 3. Alternatively, it is also possible to move the reverse idler gear 4Ri in one of the axial directions to establish the reverse change-speedstage, forinstance, instead of the second-speed change-speed stage, so that reverse traveling is carried out by motor drive.

In addition, in the change-speed mode illustrated in Fig. 3, the clutch 92 is operated to engage with the engine 91, and thereby an engine torque is transmitted to the input shaft 2 from the engine 92, as shown by the broken-line arrow "T5" in Fig. 3. Thus, the motor torque and the engine torque are united one another on the input shaft 2, and thereby dual- or hybrid-drive traveling is carried out by the second-speed change-speed stage.

As illustrated in Fig. 4, the motor-side connection controller 5 puts the sleeve 63 of the drive-side sub-connector 62 and the sleeve 65 of the driven-side sub-connector 64 at the neutral position, respectively, and thereby the idling mode is established. In the idling mode, the motor-side driven gear 45F (or the fifth-speed drive gear 45D) is put in the idling state to the input shaft 2, and the fifth-speed driven gear 45F is put in the idling state to the output shaft 3. On this occasion, the transmission route for motor torque is not established.

Then, the engine-side connector 5 is operated to switch to the rotary connection state from the idling state, and thereby any one of the change-speed stages for transmitting an engine torque is established. For example, as illustrated by the arrow "M6" in Fig. 4, the third-speed/fourth-speed sub-connector 53 moves the sleeve 54 in the other one of the axial directions (i.e., in the left direction in the drawings), and thereby the fourth-speed drive gear 44D is operated to switch to the rotary connection state to the input shaft 2 from the idling state, and thereby the fourth-speed change-speed stage is established. Moreover, the clutch 92 is operated to engage with the engine 91, and thereby engine-drive traveling is carried out using the fourth-speed change-speed stage. The engine torque outputted from the engine 91 is transmitted from the clutch 92 to the differential gear unit 94 via the input shaft 2, the fourth-speed drive gear 44D, the fourth-speed driven gear 44F and the output shaft 3, as shown by the broken-line arrow "T6" in Fig. 4. On this occasion, the motor-side drive gear 61, and the motor output shaft 933 are not driven reversely, because the motor-side driven gear 45D (or the fifth-speed drive gear 45D) and the fifth-speed driven gear 45F are in the idling state, respectively.

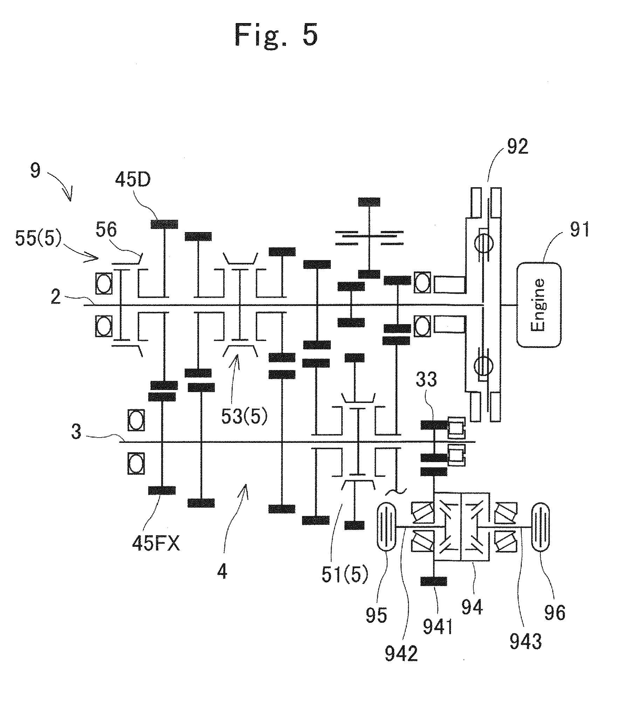

Hereinafter, how the transmission 1 for hybrid vehicle according to First Embodiment effects advantages will be described while making comparisons with a conventional transmission 9 for gasoline vehicle. Fig. 5 is a skeleton diagram illustrating power transmission routes in a conventional transmission for engine-drive vehicle according to related art, which comprises change-speed stages constructed in the same manner as those of First Embodiment. Fig. 5 is a skeleton diagram illustrating power transmission routes in the conventional transmission for engine-drive vehicle according to related art. Note that the transmission 9 for engine-drive vehicle does not comprise any of the motor-side connector 6 and motor-side connection controller 7 that the transmission 1 for hybrid vehicle according to First Embodiment comprises.

The transmission 9 for engine-drive vehicle comprises, instead of the drive-side sub-connector 62 of the motor-side connector 6, a fifth-speed sub-connector 55 serving partially as the engine-side connector 5. The fifth-speed sub-connector 55 is a connector including an annular sleeve 56. Note that the same product as that for the above-described drive-side sub-connector 62 is employable for the fifth-speed sub-connector 55, although their designations are different one another. Moreover, the conventional transmission 9 further comprises a fifth-speed driven gear 45FX disposed un-rotatably in relative to the output shaft 3.

As can be understood by comparing the two skeleton diagrams shown in Fig. 1 and Fig. 5 with each other, only adding the driven-side sub-connector 64 and motor-side drive gear 61 to the conventional transmission 9 for engine-driven vehicle makes it possible to materialize the transmission 1 for hybrid vehicle according to First Embodiment. Moreover, the motor torque received from the motor-side drive gear 61 can be transmitted to the input shaft 2 in the change-speed mode, and can be transmitted to the output shaft 3 in the direct-connection mode. Therefore, not only constituent elements can be added in a least quantity, but also the transmission 1 according to First Embodiment can be constructed without altering the conventional transmission 9 on a large scale. Accordingly, development costs of the transmission 1 according to First Embodiment can be made inexpensive. Moreover, the number of gears can be decreased less in the transmission 1 according to First Embodiment than the number of gears in the power transmission mechanism constructed as disclosed in Japanese Unexamined Patent Publication (KOKAI) GazetteNo. 2002-114048. Consequently, manufacturing costs of the transmission 1 according to First Embodiment can be made inexpensive. In addition, the number of gears to be disposed one after another in a row on the input shaft 2 and output shaft 3 does not increase at all in the transmission 1 according to First Embodiment. As a result, the axis-wise overall length of the transmission 1 according to First Embodiment is not increased or extended at all, compared with that of the conventional transmission 9. Therefore, the transmission 1 according to First Embodiment produces restrictions less when being provided on-board.

Moreover, the transmission 1 for hybrid vehicle according to First Embodiment comprises the motor-side connection controller 7. Accordingly, the transmission 1 according to First Embodiment can perform a 3-way selection control to select one mode from the group consisting of the direct-connectionmode,thechange-speed mode,andtheidling mode. In the direct-connection mode, a motor torque is transmitted from the output shaft 3 to the differential gear unit 94 directly so that the transmission 1 according to First Embodiment has higher drive efficiency and exhibits enhanced regeneration efficiency even in the regenerative power generation during braking. In the change-speed mode, a motor torque is transmitted from the input shaft 2 to the differential gear unit 94 by way of any one of the change-speed stages. Consequently, the transmission 1 according to First Embodiment can select a preferable change-speed ratio in compliance with situations even during motor-drive traveling. Furthermore, in the direct-connection mode and change-speed mode, the transmission 1 according to First Embodiment can allocate a torque appropriately for the motor 93 and engine 91, respectively, so that the transmission 1 can carry out dual- or hybrid-drive (or hybrid) traveling. In the idling mode, the motor 93 does not make any unnecessary rotary load at all during engine-drive traveling. Therefore, the respective modes result in a comprehensive advantageous effect that improves the fuel consumption or mileage of hybrid vehicle.

In addition, the transmission 1 for hybrid vehicle according to First Embodiment transmits a motor torque via the input shaft 9 and reverse gear subassembly when it employs the motor 93 to do reverse driving. Accordingly, the transmission 1 according to First Embodiment does not need to rotate the motor 93 in the reverse direction. Consequently, the transmission 1 according to First Embodiment makes it unnecessary to switch the motor 93 between the normal rotation and the reverse rotation at the time of reverse driving. As a result, it is simplified to control the motor 93. Moreover, the motor 93 can be used doubly not only to drive traveling but also to start the engine 91, and besides, the engine 91 can be started up simultaneously even when doing reverse driving by the motor 93. In addition, the change-speed ratio during reverse driving by the motor 93 is a value obtained by multiplying a change-speed ratio, which is determined by the number of gear teeth in the motor-side drive gear 61 and motor-side driven gear 45D (or the fifth-speed drive gear 45D), by another change-speed ratio of the reverse gear subassembly. Therefore, the change-speed ratio during reverse driving by the motor 93 can be set up within a wide range.

Moreover, the transmission 1 for hybrid vehicle according to First Embodiment comprises the motor-side driven gear 45D (or the fifth-speed drive gear 45D) arranged adj acent to the other one of the opposite ends of the input shaft 2. Accordingly, the axis-wise overall length of the motor 93 is accommodated within the range of the overall length of the input shaft 2. Consequently, the axis-wise overall length involving the motor 93 and transmission 1 according to First Embodiment does not increase or extend at all. As a result, minor or small restrictions arise when providing a vehicle with the transmission 1 according to First Embodiment on-board. Therefore, the transmission 1 according to First Embodiment is suitable especially for "FF" type (i.e., front-engine and front-drive type) vehicles in which the engine 91, the transmission 1 and the motor 93 are arranged in proximity to each other.

### (Second Embodiment)

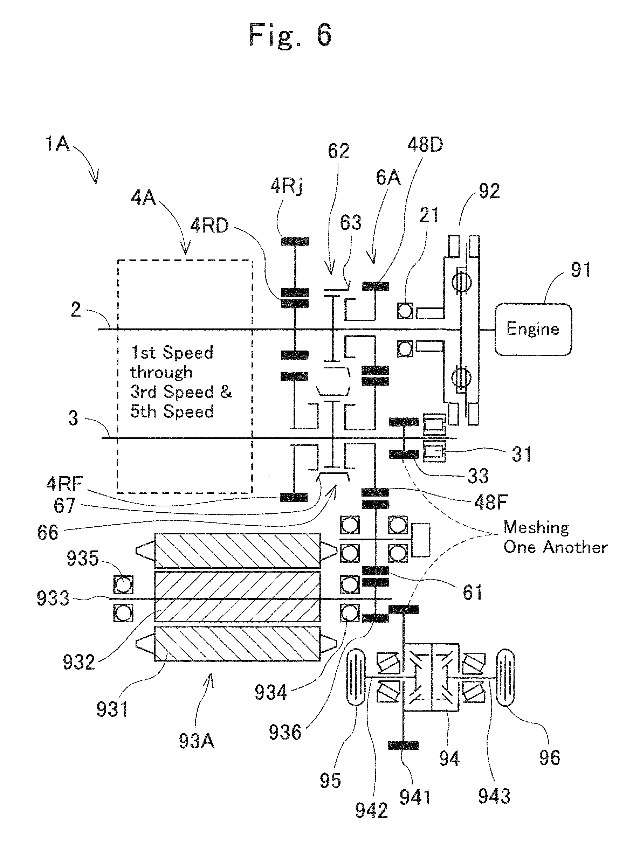

Hereinafter, a transmission 1A for hybrid vehicle according to Second Embodiment of the present invention will be described while concentrating on features that differ from those of the transmission 1 according to First Embodiment. Fig. 6 is a skeleton diagram illustrating power transmission routes in the transmission 1A according to Second Embodiment. Parts of Second Embodiment being the same as those of First Embodiment are designated with identical symbols in Fig. 6, and duplicating descriptions on the identical parts will be therefore abbreviated hereinbelow. Moreover, the first-speed through third-speed and fifth-speed change-speed gear assemblies, which are constructed adjacent to the left side on the input shaft 2 and output shaft 3 in the drawing, are indicated in an abbreviated manner with the broken-line rectangle.

The change-speed gear assembly 4A comprises a pair of forward first-speed through fifth-speed gears, and a pair of reverse gears. A fourth-speed drive gear 48D, and a reverse drive gear 4RD are arranged in this order from the right side of the input shaft 2 to the left side in Fig. 6. The fourth-speed drive gear 48D is made switchable between the idling state and the rotary connection state to the input shaft 2. The reverse drive gear 4RD is made un-rotatable relatively to the input shaft 2. On the other hand, a fourth-speed driven gear 48F, and a reverse driven gear 4RF are arranged in this order from the right side of the output shaft 3 to the left in the drawing. The fourth-speed driven gear 48F, and the reverse driven gear 4RF are made switchable between the idling state and the rotary connection state to the output shaft 3.

In Second Embodiment, the fourth-speed drive gear 48D, which is present adjacent to the one of the opposite ends of the input shaft 2 close to the engine 91, makes a specific drive gear, whereas the fourth-speed driven gear 48Fmakesaspecificdrivengear. Moreover, the fourth-speed driven gear 48F is doubled as a motor-side driven gear 48F. In addition, a reverse idler gear 4Rj is disposed in a reverse gear subassembly making a reverse change-speed stage. The reverse idler gear 4Rj always meshes with the reverse drive gear 4RD and with the reverse driven gear 4RF. Thus, the reverse idler gear 4Rj, the reverse drive gear 4RD, and the reverse driven gear 4RF make up the reverse change-speed stage. Note that the output shaft 3 rotates in the reverse direction opposite to the rotary direction during forward traveling.

A not-shown engine-side connector is provided for the not-shown first-speed, second-speed, third-speed and fifth-speed change-speed gear assemblies. The engine-side connector can be made up by combining publicly-known synchronizers (e.g., synchromesh mechanisms) appropriately.

The motor 93A comprises a stator 931, and a rotor 932. The rotor 932 is provided with a motor output shaft 933 on the axis. The motor output shaft 933 is arranged in parallel to the input shaft 2. Consequently, the axis-wise overall length of the motor 93A is accommodated within the range of the overall length of the input shaft 2. Moreover, the motor output shaft 933 is provide with a motor output gear 936, which is disposed un-rotatably in relative to the motor output shaft 933, adjacent to one of the opposite ends close to the engine 91 (i.e., on the right-end side in Fig. 6) .

The motor-side connector 6A comprises a motor-side drive gear 61, a drive-side sub-connector 62, and a driven-side selective sub-connector 66. The motor-side driven gear 61 is placed between the motor output gear 936 and the motor-side driven gear 48F (or the fourth-speed driven gear 48F) of the output shaft 3, and meshes with the motor output gear 936 and with the motor-side driven gear 48F (or the fourth-speed driven gear 48F). In Second Embodiment, the number of gear teeth between the motor 93 and the output shaft 3 is augmented more than that in First Embodiment. Thus, the motor 93 is placed at a position that is separated away from the output shaft 3 so as not to interfere therewith. Therefore, it is allowable as well to dispose the motor-side drive gear 61 directly on the motor-side output shaft 933 when the motor 93 is not restricted at all in the placement position.

The motor-side sub-connector 62 is placed between the fourth-speed drive gear 48D of the input shaft 2 and the reverse drive gear 4RD. The drive-side sub-connector 62 moves an annular sleeve 63 from the neutral position in one of the axial directions (i.e., in the right direction in Fig. 6), and thereby operates the fourth-speed drive gear 48D to switch to the rotary connection state to the input shaft 2 from the idling state.

The driven-side selective sub-connector 66 is placed between the fourth-speed driven shaft 48F of the output shaft 3 and the reverse driven gear 4RF. The driven-side selective sub-connector 66 comprises an annular sleeve 67. Note that the annular sleeve 67 is un-rotatable relatively to the output shaft 3 but is movable in both of the axial directions. When the sleeve 67 is present at the neutral position, both of the motor-side driven gear 48F (or the fourth-speed driven gear 48F) and reverse driven gear 4RF are put in the idling state, respectively. The driven-side selective sub-connector 66 moves the sleeve 67 from the neutral position in one of the axial directions (i.e., in the right direction in Fig. 6), and thereby operates the motor-side driven gear 48F (or the fourth-speed driven gear 48F) to switch to the rotary connection state to the output shaft 3 from the idling state. Moreover, the driven-side selective sub-connector 66 moves the sleeve 67 from the neutral position in another one of the axial directions (i.e., in the left direction in the drawing), and thereby operates the reverse driven gear 4RF to switch to the rotary connection state to the output shaft 3 from the idling state.

A not-shown motor-side connection controller controls the drive-side sub-connector 62 and driven-side selective sub-connector 66 independently of each other. Moreover, the motor-side connection controller subjects the motor-side connector 6A to a 3-way selection control where one mode is selected from the group consisting of the direct-connectionmode,thechange-speed mode,andtheidling mode.

The transmission 1A for hybrid vehicle according to Second Embodiment operates mostly in the same manner as the transmission 1 according First Embodiment does in the three modes. However, when the driven-side selective sub-connector 66 controls the reverse change-speed stage to switch to the rotary connection state from the idling state, the motor-side driven gear 48F (or the fourth-speed driven 48F) turns into the idling state to the output shaft 3 automatically.

The transmission 1A for hybrid vehicle according to Second Embodiment effects advantages in the same manner as the transmission 1 according to First Embodiment does. Moreover, in the transmission 1A according to Second Embodiment, only one of the fourth-speed change-speed stage and the reverse change-speed stage is operated to switch to the rotary connection state from the idling state, because the change-speed gear assembly 4A made up of a plurality of change-speed gear subassemblies further comprises a reverse change-speed gear subassembly, and because the driven-side selective sub-connector 66 comprising the sleeve 67 makes the claimed "driven-side subconnector." Consequently, regardless of whatever means, a motor and/or an engine, drives a hybrid vehicle to travel, the transmission 1A according to Second Embodiment works as a superb interlock mechanism, because the transmission 1A securely prevents the fourth-speed change-speed stage and the reverse change-speed stage from meshing one another doubly.

Note that the constituents, such as the forward first-speed through fifth-speed change-speed stages and the reverse change-speed stage, which are exemplified in First and Second Embodiments described above, can comprise the other publicly-known constituents as well. Moreover, the order of aligning the change-speed stages on the input shaft 2 and output shaft 3 is hardly restricted at all. That is, it is feasible to apply or modify the transmission for hybrid vehicle according to the present invention in various manners.

Having now fully described the present invention, it will be apparent to one of ordinary skill in the art that many changes and modifications can be made thereto without departing from the spirit or scope of the present invention as set forth herein including the appended claims.

## Claims

1. A transmission for hybrid vehicle, the transmission comprising:
an input shaft to be rotatably connected to a rotary shaft of an engine;
an output shaft to be rotatably connected to drive wheels;
a change-speed gear assembly including drive gears disposed on the input shaft, driven gears disposed on the output shaft to mesh with the drive gears, the drive gears and driven gears making change-speed stages, respectively, wherein: a specific drive gear of the drive gears and a specific driven gear of the driven gears, which make a specific change-speed stage of the change-speed stages, are made switchable between an idling state and a rotary connection state: and the other drive gears and driven gears, which make change-speed stages other than the specific change-speed stage, are made switchable between an idling state and a rotary connection state, respectively;
an engine-side connector operating to switch one of the drive gears and the driven gears, which make change-speed stages other than the specific change-speed stage, between the idling state and the rotary connection state, respectively; and
a motor-side connector including a motor-side drive gear to be rotatably driven by a motor while meshing with a motor-side driven gear doubled as one of the specific drive gear and the specific driven gear, a drive-side sub-connector operating to switch the specific drive gear between the idling state and the rotary connection state, and a driven-side sub-connector operating to switch the specific driven gear between the idling state and the rotary connection state.

2. The transmission according to claim 1 further comprising a motor-side connection controller controlling the drive-side sub-connector and the driven-side sub-connector independently, wherein the motor-side connection controller carries out a 3-way selection control to select one mode from the group consisting of:
a direct-connection mode, wherein the specific driven gear is put in the rotary connection state;
a change-speed mode, wherein the specific driven gear is put in the idling state and the specific drive gear is put in the rotary connection state; and
an idling mode, wherein the specific driven gear is put in the idling state and the specific drive gear is put in the idling state.

3. The transmission according to claim 1 or 2, wherein:
the change-speed gear assembly comprises a reverse gear subassembly including a reverse drive gear disposed on the input shaft, a reverse driven gear disposed on the output shaft, and a reverse idler gear meshing with the reverse drive gear and the reverse driven gear to make a reverse change-speed stage, wherein a constituent reverse gear, one of the reverse drive gear and the reverse driven gear, is made switchable between the idling state and the rotary connection state; and
the drive-side sub-connector, or the driven-side sub-connector comprises a selective connector including a sleeve, wherein: the specific drive gear, or the specific driven gear, and the constituent reverse gear are put in the idling state when the sleeve is at a neutral position thereof; the sleeve is moved from the neutral position in one of opposite axial directions thereof, thereby operating the specific drive gear or the specific driven gear to switch to the rotary connection state from the idling state; and the sleeve is moved from the neutral position in another one of the opposite axial directions, thereby operating the constituent reverse gear to switch to the rotary connection state from the idling state.

4. The transmission according to claim 3, wherein a motor torque is transmitted from the motor-side drive gear to the output shaft via the specific drive gear, the input shaft and the reverse gear subassembly when the motor is employed to reverse drive the hybrid vehicle.

5. The transmission according to any one of claims 1 through 4, wherein the specific drive gear is arranged adjacent to one of opposite ends of the input shaft close to the engine, or adjacent to another one of the opposite ends away from the engine; and a rotary shaft of the motor is arranged parallel to the input shaft, thereby making an axis-wise overall length of the motor involving the rotary shaft fall within a range of an overall length of the input shaft.

6. The transmission according to claim 1, 2 or 4, wherein one of the paired drive gears and driven gears meshing one another and disposed most closely to the engine makes the specific change-speed stage.

7. The transmission according to claim 1, 2 or 4, wherein one of the paired drive gears and driven gears meshing one another and disposed most distantly from the engine makes the specific change-speed stage.

8. The transmission according to claim 3, wherein the change-speed gear assembly, and the drive-side sub-connector or the driven-side sub-connector make an interlock mechanism preventing the specific change-speed stage and the reverse change-speed stage from meshing one another doubly.

9. The transmission according to claim 3, wherein the change-speed gear assembly, and the drive-side sub-connector or the driven-side sub-connector make an interlock mechanism prohibiting change-speed stages other than the specific change-speed stage from being established.

10. The transmission according to claim 3, wherein the motor-side driven gear turns into the idling state to the output shaft automatically when the drive-side sub-connector or the driven-side sub-connector controls the reverse change-speed stage to switch to the rotary connection state from the idling state.

11. The transmission according to claim 1, 2, 4, 8, 9 or 10 operating the motor to rotate in the normal (or clockwise) direction or the reverse (or counterclockwise) direction alone.
